# EUROPÄISCHE PATENTSCHRIFT

(11) **EP 0 367 915 B1**
(45) Veröffentlichungstag und Bekanntmachung des Hinweises auf die Patenterteilung: **12.05.1993**
(21) Anmeldenummer: 89114863.7
(22) Anmeldetag: 11.08.1989
(51) Int. Cl.: G01D 18/00, G01D 5/244

(54) **Positionsmesseinrichtung**
Position measuring device
Capteur de position

(30) Priorität: 02.09.1988 DE 3829815
(43) Veröffentlichungstag der Anmeldung: 16.05.1990
(73) Patentinhaber: Dr. Johannes Heidenhain GmbH, D-83292 Traunreut (DE)
(72) Erfinder: Schmitt, Walter, Ing.grad., D-8225 Traunreut (DE)

(56) Entgegenhaltungen:
- DE-A- 3 631 429
- DE-A- 3 636 111

## Beschreibung

Die Erfindung betrifft eine Positionsmeßeinrichtung gemäß dem Oberbegriff des Anspruchs 1.

Derartige Positionsmeßeinrichtung in Form von Längenmeßeinrichtung oder von Winkelmeßrichtungen werden insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen von prüfobjekten eingesetzt.

Aus der DE-C-30 10 611 ist eine Positionsmeßeinrichtung zur Messung der Relativlage zweier Objekte bekannt, bei der die Teilung eines mit dem einen Objekt verbundenen Teilungsträgers von einer mit dem anderen Objekt verbundenen Abtasteinrichtung abgetastet wird. Die von der Abtasteinrichtung erzeugten analogen Meßsignale werden einer Auswerteeinrichtung mit Triggerstufen zur Bildung von Meßwerten für die Relativlage der beiden Objekte zugeführt. Zur Überprüfung der Einstellung der Triggerschwellenspannungen der Triggerstufen wird ein Aktivierungssignal in Form eines Prüfsignals den Eingängen der Triggerstufen zugeführt; dieses Prüfsignal wird mittels einer separaten Prüfsignalleitung der Auswerteeinrichtung zugeleitet. In der DE-C-34 45 617 ist eine Positionmeßeinrichtung zur Messung der Relativlage zweier Objekte beschrieben, bei der die absolute Teilung eines mit dem einen Objekt verbundenen Teilungsträgers von einer mit dem anderen Objekt verbundenen Abtasteinrichtung abgetastet wird. Die von der Abtasteinrichtung erzeugten digitalen Meßsignale werden über Meßsignalleitungen von der Abtasteinrichtung zu einer Auswerteeinrichtung seriell übertragen. Diese serielle Übertragung der digitalen Meßsignale wird von einem Aktivierungssignal in Form eines Abrufsignals veranlaßt; dieses Abrufsignal wird von der Auswerteeinrichtung mittels einer separaten Abrufsignalleitung an die Abtasteinrichtung übertragen.

Der Erfindung liegt die Aufgabe zugrunde, bei einer Positionsmeßeinrichtung eine Übertragung eines Aktivierungssignals von der Auswerteeinrichtung zur Abtasteinrichtung ohne eine eigene Übertragungsleitung zu ermöglichen.

Diese Aufgabe wird erfindungsgemäß durch das kennzeichnende Merkmal des Anspruches 1 gelöst.

Die mit der Erfindung erzielten Vorteile bestehen insbesondere darin, daß für das Aktivierungssignal keine gesonderte Übertragungsleitung erforderlich ist, die bei einem Leitungsbruch eine gewünschte Funktionsauslösung in der Abtasteinrichtung unmöglich macht. Es ergibt sich somit eine einfacher aufgebaute und preiswertere Positionsmeßeinrichtung.

Vorteilhafte Ausbildungen der Erfindung entnimmt man den abhängigen Ansprüchen.

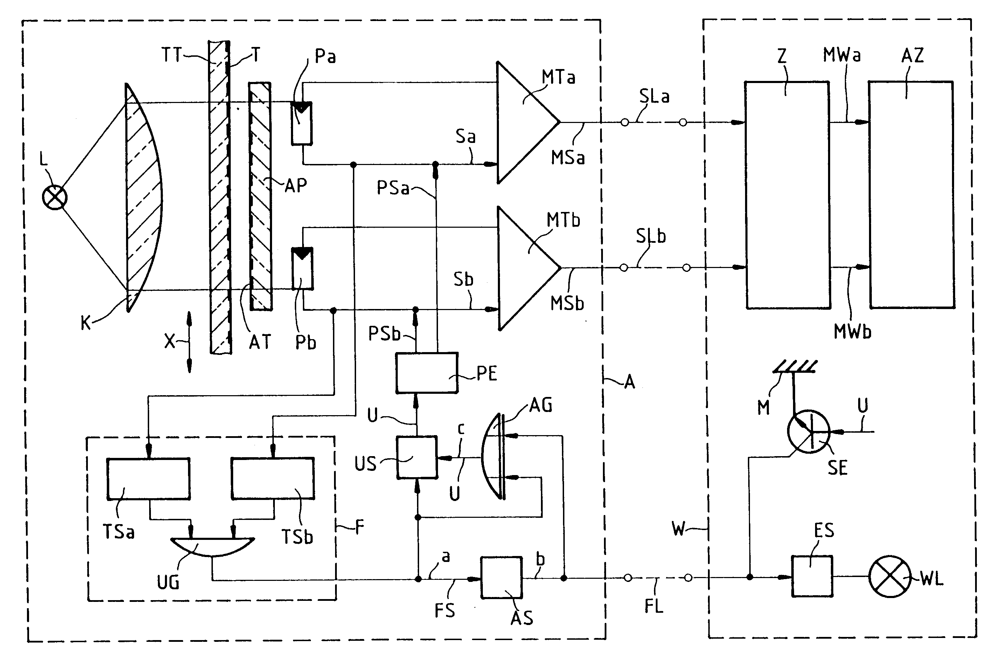

Ein Ausführungsbeispiel der Erfindung wird anhand der Zeichnung näher erläutert.

In der Figur ist schematisch eine Positionsmeßeinrichtung in Form einer inkrementalen Längenmeßeinrichtung zum Messen der Relativlage zweier nicht gezeigter Objekte dargestellt. Die inkrementale Teilung T eines mit dem einen Objekt verbundenen Teilungsträgers TT wird von einer mit dem anderen Objekt verbundenen Abtasteinrichtung A abgetastet, die eine Lichtquelle L, einen Kondensor K, eine Abtastplatte AP mit einer Abtastteilung AT, zwei Photoelemente Pa, Pb sowie zwei Meßtrigger MTa, MTb mit jeweils einem Vorverstärker aufweist. Die Abtastteilung AT besteht aus zwei Abtastfeldern, deren Teilungsperioden mit der Teilungsperiode der inkrementalen Teilung T übereinstimmen und die in Meßrichtung X um ein Viertel der Teilungsperiode der inkrementalen Teilung T gegeneinander versetzt sind.

Der von der Lichtquelle L ausgehende Lichtstrom wird vom Kondensor K parallel gerichtet, durchsetzt die Teilung T des Teilungsträgers TT sowie die beiden Abtastfelder der Abtastteilung AT der Abtastplatte AP und fällt auf die beiden Photoelemente Pa, Pb, die jeweils einem der beiden Abtastfelder der Abtastteilung AT zugeordnet sind. Bei der Meßbewegung der Abtasteinrichtung A relativ zum Teilungsträger TT in Meßrichtung X erzeugen die beiden Photoelemente Pa, Pb zwei periodische analoge Abtastsignale Sa, Sb, die einen gegenseitigen Phasenversatz von 90° aufweisen, aus dem die Meßrichtung + X, - X erkannt werden kann.

Die beiden periodischen analogen Abtastsignale Sa, Sb werden einmal mittels der beiden Meßtrigger MTa, MTb in zwei binäre Meßsignale MSa, MSb in Form von periodischen Rechtecksignalen umgeformt, die mittels zweier Meßsignalleitungen SLa, SLb an eine Auswerteeinrichtung W übertragen werden, die einen Vorwärts-/Rückwärtszähler Z mit einem Richtungsdiskriminator sowie eine nachgeschaltete Anzeigeeinheit AZ aufweist. Die beiden binären Meßsignale MSa, MSb werden dem Vorwärts-/Rückwärtszähler Z zum vorzeichenrichtigen Zählen der Inkremente der Teilung T des Teilungsträgers TT bei der Abtastung durch die Abtasteinrichtung A zugeführt. Die Zählergebnisse des Vorwärts-/Rückwärtszählers Z stellen die Meßwerte MWa, MWb für die Relativlage der beiden zueinander verschiebbaren Objekte dar, die in der Anzeigeeinheit AZ in digitaler Form angezeigt werden. Die beiden Objekte können durch einen Schlitten und das Bett einer nicht gezeigten Bearbeitungsmaschine gebildet sein.

Die beiden periodischen analogen Abtastsignale Sa, Sb werden zum anderen einer Fehlermeldeeinrichtung F der Abtasteinrichtung A zugeführt, die zwei parallele Triggerstufen TSa, TSb in Form sogenannter Fenstertrigger aufweist, die jeweils eine gleiche obere Triggerschwelle und eine gleiche untere Triggerschwelle besitzen. Die beiden periodischen analogen Abtastsignale Sa, Sb beaufschlagen jeweils eine der beiden Triggerstufen TSa, TSb, denen ein Undgatter UG nachgeschaltet ist. Am Ausgang dieses Undgatters UG steht ein binäres Fehlererkennungssignal FS an, das bei fehlerhaften Signalparametern (fehlerhafte Amplitudenhöhen, fehlerhafte gegenseitige Phasendifferenz) der beiden periodischen analogen Abtastsignale Sa, Sb den Signalzustand Null und im fehlerfreien Fall den Signalzustand Eins aufweist. Eine derartige Fehlermeldeeinrichtung F ist beispielsweise in der DE-A-20 20 393 beschrieben.

Dieses Fehlererkennungssignal FS wird über eine Ausgangsstufe AS mit Strombegrenzung von der Abtasteinrichtung A mittels einer Fehlersignalleitung FL an eine Eingangsstufe ES der Auswerteeinrichtung W übertragen und weiter einer optischen Warneinrichtung WL in Form einer Lampe zugeführt.

Zur exakten Triggerung der beiden periodischen analogen Abtastsignale Sa, Sb müssen die Triggerschwellenspannungen der beiden Meßtrigger MTa, MTb durch nicht gezeigte Mittel auf einen bestimmten Wert eingestellt werden. Durch Alterung der beiden Meßtrigger MTa, MTb können sich aber diese vorgegebenen Triggerschwellenspannungen im Laufe der Zeit ändern, so daß durch eine falsche Triggerung der beiden periodischen analogen Abtastsignale Sa, Sb fehlerhafte Meßwerte MWa, MWb gebildet werden können. Desgleichen können sich durch eine alterungsbedingte Helligkeitsabnahme der Lichtquelle L die Amplitudenhöhen der beiden periodischen analogen Abtastsignale Sa, Sb im Laufe der Zeit verringern, wodurch sich die Relativlagen der Amplitudenhöhen bezüglich der vorgegebenen Triggerschwellenspannungen der beiden Meßtrigger MTa, MTb verändern, so daß sich ebenfalls durch die dadurch bedingte falsche Triggerung der beiden periodischen analogen Abtastsignale Sa, Sb fehlerhafte Meßwerte MWa, MWb ergeben können.

Zur Überprüfung der Einstellung der Triggerschwellenspannungen der beiden Meßtrigger MTa, MTb bezüglich der Amplitudenhöhen der beiden periodischen analogen Abtastsignale Sa, Sb ist in der Abtasteinrichtung A eine Prüfeinrichtung PE vorgesehen, die die Eingänge der beiden Meßtrigger MTa, MTb mit variablen Prüfspannungen PSa, PSb zur Anhebung oder Absenkung der Triggerschwellenspannungen beaufschlagt; eine derartige Überprüfung ist in der DE-C-30 10 611 beschrieben.

Die Aktivierung dieser Prüfeinrichtung PE erfolgt mittels eines Aktivierungssignals U, das von der Auswerteeinrichtung W über die bestehende Fehlersignalleitung FL zur Abtasteinrichtung A übertragen wird. Dieses Aktivierungssignal U beaufschlagt die Basis eines Schaltelements SE, dessen Emitter mit Masse M und dessen Kollektor mit der Fehlersignalleitung FL verbunden sind.

In der Abtasteinrichtung A beaufschlagt das Fehlererkennungssignal FS der Fehlermeldeeinrichtung F auf dem Leitungsteil a gleichzeitig die Ausgangsstufe AS, einen Eingang eines Antivalenzgatters AG und eine dem Antivalenzgatter AG über einen Leitungsteil c nachgeschaltete Ausblendstufe US, deren Ausgang mit dem Eingang der Prüfeinrichtung PE verbunden ist. Das Fehlererkennungssignal FS aus dem Leitungsteil b am Ausgang der Ausgangsstufe AS wird zusätzlich noch dem zweiten Eingang des Antivalenzgatters AG zugeführt.

Das Fehlererkennungssignal FS besitzt im Normalfall (Fehlerfreien Fall) den Signalzustand Eins. Beim Anlegen des Aktivierungssignal U mit dem Signalzustand Eins an die Basis des Schaltelements SE wird die Fehlersignalleitung FL in der Auswerteeinrichtung W durch das Schaltelement SE mit der Masse M verbunden, so daß der Signalzustand Eins des Fehlererkennungssignals FS auf dem Leitungsteil b in den Signalzustand Null invertiert wird; der Signalzustand Eins des Fehlererkennungssignals FS auf dem Leitungsteil a bleibt erhalten. Da an den beiden Eingängen des Antivalenzgatters AG als Vergleichsstufe das Fehlererkennungssignal FS nun mit den beiden Signalzuständen Eins und Null anliegt, erscheint an seinem Ausgang auf dem Leitungsteil c wieder das Aktivierungssignal U mit dem Signalzustand Eins, das über die Ausblendstufe US den Eingang der Prüfeinrichtung PE zur Durchführung der Überprüfung beaufschlagt. Die Ausblendstufe US dient der Vermeidung fehlerhafter Schaltzustände des Antivalenzgatters AG aufgrund eines nicht idealen Zeitverhaltens.

In nicht gezeigter Weise kann das Aktivierungssignal auch als Abrufsignal für die Meßdaten eines Meßwertwandlers verwendet werden, der über eine Datenleitung mit einer Auswerteeinrichtung verbunden ist, indem das Abrufsignal in der vorbeschriebenen Weise von der Auswerteeinrichtung über die Datenleitung in den Meßwertwandler zur Veranlassung der nachfolgenden seriellen Übertragung der Meßdaten über die Datenleitung zur Auswerteeinrichtung übertragen wird. Bei einer inkrementalen Positionsmeßeinrichtung, bei der von einer Abtasteinrichtung Meßsignale über Meßsignalleitungen und Referenzimpulse über eine Referenzleitung an eine Auswerteeinrichtung übertragen werden, kann das Aktivierungssignal von der Auswerteeinrichtung über die Referenzleitung in die Abtasteinrichtung zum Abruf der Referenzimpulse übertragen werden.

Die Erfindung ist bei absoluten und inkrementalen Positionsmeßeinrichtungen mit Erfolg einsetzbar, die nach dem lichtelektrischen, magnetischen, kapazitiven oder induktiven Meßprinzip arbeiten.

## Patentansprüche

1. Positionsmeßeinrichtung zur Messung der Relativlage zweier Objekte, bei der die Teilung eines mit dem einen Objekt verbundenen Teilungsträgers (TT) von einer mit dem anderen Objekt verbundenen Abtasteinrichtung (A) abgetastet wird, bei der wenigstens ein Signal von der Abtasteinrichtung (A) zur Auswerteeinrichtung (W) über wenigstens eine Signalleitung übertragen wird und bei der wenigstens ein Aktivierungssignal (U) zur Funktionsauslösung von der Auswerteeinrichtung (W) zur Abtasteinrichtung (A) übertragen wird, dadurch gekennzeichnet, daß die Übertragung des wenigstens einen Aktivierungssignals (U) von der Auswerteeinrichtung (W) zur Abtasteinrichtung (A) über die wenigstens eine Signalleitung (FL) erfolgt.

2. Meßeinrichtung nach Anspruch 1, dadurch gekennzeichnet, daß das Aktivierungssignal (U) den Signalzustand auf der Signalleitung (FL) invertiert.

3. Meßeinrichtung nach Anspruch 2, dadurch gekennzeichnet, daß zur Invertierung des Signalzustandes auf der Signalleitung (FL) ein vom Aktivierungssignal (U) beaufschlagtes Schaltelement (SE) in der Auswerteeinrichtung (W) und zum Erkennen der Invertierung des Signalzustandes eine Vergleichsstufe (AG) in der Abtasteinrichtung (A) vorgesehen sind.

4. Meßeinrichtung nach Anspruch 3, dadurch gekennzeichnet, daß die Signalleitung (FL) über eine Ausgangsstufe (AS) mit Strombegrenzung in der Abtasteinrichtung (A) und über eine Eingangsstufe (ES) mit Strombegrenzung in der Auswerteeinrichtung (W) verläuft.

5. Meßeinrichtung nach den Ansprüchen 3 und 4, dadurch gekennzeichnet, daß das Aktivierungssignal (U) in der Auswerteeinrichtung (W) die Basis des Schaltelements (SE) beaufschlagt, dessen Emitter mit Masse (M) und dessen Kollektor mit der Signalleitung (FL) am Eingang der Eingangsstufe (ES) verbunden sind.

6. Meßeinrichtung nach den Ansprüchen 3 und 4, dadurch gekennzeichnet, daß die Eingänge der Vergleichsstufe (AG) jeweils mit der Signalleitung (FL) am Eingang und am Ausgang der Ausgangsstufe (AS) in der Abtasteinrichtung (A) verbunden sind.

7. Meßeinrichtung nach Anspruch 1, dadurch gekennzeichnet, daß die Signalleitung (FL) durch eine Fehlersignalleitung gebildet ist.

8. Meßeinrichtung nach Anspruch 1, dadurch gekennzeichnet, daß die Signalleitung durch eine Datenleitung oder eine Referenzleitung gebildet ist.

9. Meßeinrichtung nach Anspruch 3, dadurch gekennzeichnet, daß der Vergleichsstufe (AG) eine Ausblendstufe (US) nachgeschaltet ist.

10. Meßeinrichtung nach Anspruch 3, dadurch gekennzeichnet, daß die Vergleichsstufe (AG) durch ein Antivalenzgatter gebildet ist.

## Claims

1. Position measuring device for measuring the relative position of two objects, in which the graduation of a graduation support (TT) connected with one of the objects is scanned by a scanning device (A) connected with the other object, in which at least one signal is transmitted from the scanning device (A) to the evaluation device (W) via at least one signal line and in which for triggering the operation at least one activating signal (U) is transmitted from the evaluation device (W) to the scanning device (A), characterised in that the transmission of at least one activating signal (U) from the evaluation device (W) to the scanning device (A) is effected via at least one signal line (FL).

2. Measuring device according to claim 1, characterised in that the activating signal (U) inverts the state of the signal in the signal line (FL).

3. Measuring device according to claim 2, characterised in that for inverting the state of the signal in the signal line (FL) a switching element (SE), acted on by the activating signal (U), is provided in the evaluation device (W), and for recognising the inverted state of the signal, a comparator stage (AG) is provided in the scanning device (A).

4. Measuring device according to claim 3, characterised in that in the scanning dice (A) the signal line (FL) runs via a output stage (AS) with current limitation and in the evaluation device (W) the signal line (FL) runs via an input stage (ES) with current limitation.

5. Measuring device according to the claims 3 and 4, characterised in that in the evaluation device (W) the activating signal (U) acts on the base of he switching element (SE) whose emitter is connected to earth (M) and whose collector is connected to signal line (FL) at the input of the input stage (ES).

6. Measuring device according to claims 3 and 4, characterised in that the inputs of the comparator stage (AG) are connected in each case to the signal line (FL) at the input and the output of the output stage (AS) in the scanning device (A).

7. Measuring device according to claim 1, characterised in that the signal line (FL) represents an error signal line.

8. Measuring device according to claim 1, characterised in that the signal line represents a data line or a reference line.

9. Measuring device according to claim 3, characterised in that a blanking out stage (US) is connected in series with the comparator stage (AG).

10. Measuring device according to claim 3, characterised in that the comparator stage (AG) represents an exclusive OR gate.

## Revendications

1. Dispositif de mesure de position pour la mesure de la position relative de deux objets, dans lequel la graduation d'un support de graduation (TT) lié à l'un des objets est lue par un dispositif de lecture (A) lié à l'autre objet, dans lequel au moins un signal fourni par le dispositif de lecture (A) est transmis au dispositif d'exploitation (W) par l'intermédiaire d'au moins une ligne de signal et dans lequel au moins un signal d'activation (U) assurant le déclenchement de fonctions est transmis du dispositif d'exploitation (W) au dispositif de lecture (A), caractérisé par le fait que la transmission du signal d'activation (U), au nombre d'au moins un, du dispositif d'exploitation (W) vers le dispositif de lecture (A) a lieu par l'intermédiaire de la ligne de signal (FL), au nombre d'au moins une.

2. Dispositif de mesure selon la revendication 1, caractérisé par le fait que le signal d'activation (U) inverse l'état du signal sur la ligne de signal (FL).

3. Dispositif de mesure selon la revendication 2, caractérisé par le fait qu'il est prévu, pour inverser l'état du signal sur la ligne de signal (FL), un élément de commutation (SE) dans le dispositif d'exploitation (W), lequel élément reçoit le signal d'activation (U) et, pour détecter l'inversion de l'état du signal, un étage comparateur (AG) dans le dispositif de lecture (A).

4. Dispositif de mesure selon la revendication 3, caractérisé par le fait que la ligne de signal (FL) passe par un étage de sortie (AS) à limitation de courant du dispositif de lecture (A) et par un étage d'entrée (ES) à limitation de courant du dispositif d'exploitation (W).

5. Dispositif de mesure selon les revendications 3 et 4, caractérisé par le fait que, dans le dispositif d'exploitation (W), le signal d'activation (U) est appliqué à la base de l'élément de commutation (SE), dont l'émetteur est relié à la masse (M) et le collecteur est relié à la ligne de signal (FL) à l'entrée de l'étage d'entrée (ES).

6. Dispositif de mesure selon les revendications 3 et 4, caractérisé par le fait que les entrées de l'étage comparateur (AG) sont reliées à la ligne de signal respectivement à l'entrée et à la sortie de l'étage de sortie (AS) du dispositif de lecture (A).

7. Dispositif de mesure selon la revendication 1, caractérisé par le fait que la ligne de signal (FL) est constituée par une ligne de signal d'erreur.

8. Dispositif de mesure selon la revendication 1, caractérisé par le fait que la ligne de signal (FL) est constituée par une ligne de données ou une ligne de référence.

9. Dispositif de mesure selon la revendication 3, caractérisé par le fait qu'un circuit à déclenchement périodique (US) est monté à la suite de l'étage comparateur (AG).

10. Dispositif de mesure selon la revendication 3, caractérisé par le fait que l'étage comparateur (AG) est formé par une porte d'activation.
